# FASCICULE DE BREVET EUROPEEN

(11) **EP 2 633 245 B1**
(45) Date de publication et mention de la délivrance du brevet: **04.03.2020**
(21) Numéro de dépôt: 11785750.8
(22) Date de dépôt: 26.10.2011
(51) Int. Cl.: F24F 13/22, F24F 6/12

(54) **SYSTÈME D'ÉCHANGE THERMIQUE ENTRE DE L'AIR SITUÉ À L'INTÉRIEUR D'UN ESPACE ET DE L'AIR SITUÉ À L'EXTÉRIEUR DE L'ESPACE ET PROCÉDÉ DE RÉALISATION D'ÉCHANGE THERMIQUE METTANT EN OEUVRE UN TEL SYSTÈME**
WÄRMEAUSTAUSCHSYSTEM ZWISCHEN ZULUFT UND ABLUFT UND VERFAHREN MIT EINEM SOLCHEN SYSTEM
THERMAL ENERGY EXCHANGE SYSTEM BETWEEN INDOOR AND OUTDOOR AIR AND METHOD EMPLOYING SUCH SYSTEM

(30) Priorité: 29.10.2010 FR 1058939
(43) Date de publication de la demande: 04.09.2013
(73) Titulaire: Electricité de France, 75008 Paris (FR)
(72) Inventeur: TEUILLIERES, Cédric, F-77133 Fericy (FR)
(74) Mandataire: Plasseraud IP
(86) Numéro de dépôt international: PCT/FR2011/052489
(87) Numéro de publication internationale: WO 2012/056164

(56) Documents cités:
- EP-A2- 1 746 359
- WO-A1-2009/013954
- GB-A- 2 255 163
- US-A- 5 832 176

## Description

L'invention se rapporte à un système d'échange thermique entre de l'air situé à l'intérieur d'un espace et de l'air situé à l'extérieur de l'espace et à un procédé de réalisation d'échange thermique mettant en œuvre un tel système.

L'invention s'applique notamment au conditionnement de l'air situé à l'intérieur de l'espace et, en particulier, à la climatisation de l'espace. Dans une telle application, une pompe à chaleur réversible air/air constituant le système d'échange thermique permet soit de prélever de la chaleur à l'air situé à l'extérieur de l'espace pour la transférer à l'air situé à l'intérieur de l'espace, et ainsi chauffer l'espace, soit de prélever de la chaleur à l'air situé à l'intérieur de l'espace pour la transférer à l'air situé à l'extérieur de l'espace, et ainsi refroidir l'espace. Un tel système d'échange thermique met en œuvre deux échangeurs de chaleur dans lesquels circule un fluide caloporteur. Les échangeurs de chaleur forment tour à tour un évaporateur, adapté pour prélever de la chaleur, et un condenseur, adapté pour transférer la chaleur.

Au cours du fonctionnement, du fait des différences de température entre le fluide caloporteur dans l'évaporateur et l'air entourant l'évaporateur, des condensats constitués de gouttes d'eau de condensation se forment sur l'évaporateur. La production des condensats peut atteindre 0,5 l/h à 0,8 l/h par kW frigorifique. Il est nécessaire d'éliminer ces condensats qui perturbent l'échange thermique entre le fluide caloporteur dans l'évaporateur et l'air entourant l'évaporateur.

Une solution pour éliminer ces condensats consiste à utiliser une évacuation naturelle vers l'extérieur de l'eau de condensation à l'état liquide. Toutefois, une telle évacuation peut provoquer des coulures continues ou instantanées à l'intérieur du système d'échange thermique ou sur des parois de l'espace équipées du système d'échange thermique, ces coulures étant susceptibles de causer des dommages techniques au système d'échange thermique ou de détériorer au moins l'aspect visuel des parois de l'espace.

Afin de s'affranchir des inconvénients relatifs à une évacuation des condensats à l'état liquide, il est également connu d'avoir recours à un dispositif à ultrason disposé dans un bac de drainage agencé pour collecter l'eau de condensation. Ce type de système d'échange thermique décrit, par example, dans le document GB 2 255 163 permet de réaliser une évacuation de l'eau de condensation par brumisation ou vaporisation, c'est-à-dire sous la forme d'un brouillard composé de gouttelettes en suspension.

L'invention vise à améliorer l'évacuation de l'eau de condensation par brumisation ou vaporisation dans le système d'échange thermique connu.

A cet effet, selon un premier aspect, l'invention propose un système d'échange thermique entre de l'air situé à l'intérieur d'un espace et de l'air situé à l'extérieur de l'espace, comprenant :
- des premier et deuxième échangeurs de chaleur formant l'un un condenseur et l'autre un évaporateur,
- un circuit de fluide caloporteur connecté aux premier et deuxième échangeurs de chaleur et adapté pour faire circuler un fluide caloporteur dans lesdits premier et deuxième échangeurs de chaleur,
- un premier circuit d'air associé au premier échangeur de chaleur pour réaliser un échange thermique entre le fluide caloporteur et l'air situé à l'intérieur de l'espace par l'intermédiaire du premier échangeur de chaleur, et un deuxième circuit d'air associé au deuxième échangeur de chaleur pour réaliser un échange thermique entre le fluide caloporteur et l'air situé à l'extérieur de l'espace par l'intermédiaire du deuxième échangeur de chaleur,
- un bac de drainage agencé pour collecter de l'eau de condensation qui se forme sur l'évaporateur, ledit bac de drainage comprenant un dispositif à ultrason adapté pour pulvériser sous forme de gouttelettes l'eau de condensation collectée dans le bac de drainage,
ledit système d'échange thermique comprenant un dispositif de chauffage adapté pour chauffer l'eau de condensation collectée dans le bac de drainage.

En effet, le principe de fonctionnement de l'évacuation par brumisation est basé sur la mise en vibration à haute fréquence d'un organe d'excitation du dispositif à ultrason, cet organe d'excitation étant située sous une couche d'eau de condensation collectée dans le bac de drainage. L'inertie de l'eau est telle qu'elle ne peut suivre le rythme des vibrations de l'organe d'excitation et des dépressions et des surpressions successives apparaissant au sein de la couche d'eau de condensation créent un phénomène de cavitation au cours duquel des microbulles se forment et remontent vers la surface de la couche d'eau de condensation. Il en résulte un bouillonnement en surface de la couche d'eau de condensation, des gouttelettes jaillissent et forment un brouillard qui s'élève.

La température de l'eau de condensation dans le bac de drainage est un paramètre gouvernant le phénomène de cavitation. L'utilisation d'un dispositif de chauffage selon l'invention permet de porter la température de l'eau de condensation dans une plage de température permettant d'optimiser le phénomène de cavitation et ainsi d'améliorer l'évacuation de l'eau de condensation par brumisation ou vaporisation.

Le dispositif de chauffage peut comprendre une boucle de chauffage dans laquelle circule un fluide de chauffage, ladite boucle de chauffage s'étendant au voisinage du bac de drainage.

Dans un mode de réalisation particulièrement avantageux, le système d'échange thermique utilise la chaleur du fluide caloporteur issu du condenseur pour chauffer l'eau de condensation dans le bac de drainage. Le dispositif de chauffage peut alors comprendre un circuit de distribution adapté pour connecter la boucle de chauffage au circuit de fluide caloporteur, ledit circuit de distribution étant adapté pour faire circuler le fluide caloporteur issu du condenseur, comme fluide de chauffage, dans la boucle de chauffage.

On peut prévoir de n'utiliser le chauffage de l'eau de condensation que lorsque celle-ci présente une faible température, en particulier lorsque les condensats se forment sur l'évaporateur échangeant avec l'air situé à l'extérieur de l'espace, généralement plus froid que l'air situé à l'intérieur de l'espace. Le circuit de distribution peut alors être adapté pour faire circuler le fluide caloporteur dans la boucle de chauffage uniquement lorsque le premier échangeur de chaleur forme le condenseur et le deuxième échangeur de chaleur forme l'évaporateur.

En particulier, la boucle de chauffage peut présenter une première extrémité connectée au premier échangeur de chaleur et une deuxième extrémité connectée au deuxième échangeur de chaleur, le circuit de distribution comportant une conduite de dérivation connectant directement les première et deuxième extrémités de la boucle de chauffage, le circuit de distribution étant adapté pour :
- faire circuler le fluide caloporteur dans la boucle de chauffage depuis la première extrémité vers la deuxième extrémité lorsque le premier échangeur de chaleur forme le condenseur et le deuxième échangeur de chaleur forme l'évaporateur,
- faire circuler le fluide caloporteur dans la conduite de dérivation depuis la deuxième extrémité vers la première extrémité lorsque le premier échangeur de chaleur forme l'évaporateur et le deuxième échangeur de chaleur forme le condenseur.

Le bac de drainage peut présenter une face supérieure adaptée pour retenir l'eau de condensation et une face inférieure opposée à la face supérieure, la boucle de chauffage s'étend sur la face inférieure du bac de drainage.

Pour permettre à l'eau de condensation d'atteindre une température assurant une évacuation par brumisation optimale, le bac de drainage peut comporter une paroi de fond et une paroi latérale s'étendant perpendiculairement depuis la paroi de fond, la paroi de fond et la paroi latérale délimitant un espace de réception de l'eau de condensation, le bac de drainage comportant en outre au moins une paroi interne agencée dans l'espace de réception pour définir un canal pour l'eau de condensation collectée, ledit canal présentant une zone amont, par laquelle l'eau de condensation entre dans l'espace de réception, et une zone aval, dans laquelle le dispositif à ultrason est placé, le canal étant placé en correspondance avec la boucle de chauffage.

Pour s'assurer qu'une température offrant une évacuation par brumisation optimale a été atteinte, le système d'échange thermique peut comprendre un capteur de température adapté pour mesurer une température de l'eau de condensation collectée dans le bac de drainage, ledit capteur de température étant connecté au dispositif à ultrason pour activer ledit dispositif à ultrason lorsque ladite température dépasse une température seuil.

Le système d'échange thermique peut également prendre en compte d'autres paramètres permettant d'optimiser l'évacuation par brumisation.

En particulier, le système d'échange thermique peut comprendre un capteur de hauteur d'eau adapté pour mesurer une hauteur de l'eau de condensation collectée dans le bac de drainage, ledit capteur de hauteur d'eau étant connecté au dispositif à ultrason pour activer ledit dispositif à ultrason lorsque ladite hauteur d'eau dépasse une hauteur seuil.

De plus, le circuit d'air associé à l'évaporateur peut comprendre une entrée d'air, une sortie d'air, et un ventilateur adapté pour, dans un état de fonctionnement, faire circuler l'air entre l'entrée d'air et la sortie d'air au travers de l'évaporateur, le système d'échange thermique comprenant un capteur d'état adapté pour détecter l'état du ventilateur, ledit capteur d'état étant connecté au dispositif à ultrason pour activer ledit dispositif à ultrason lorsque l'état de fonctionnement du ventilateur est détecté.

Selon un deuxième aspect, l'invention concerne un procédé de réalisation d'échange thermique entre de l'air situé à l'intérieur d'un espace et de l'air situé à l'extérieur de l'espace, ledit procédé de réalisation mettant en œuvre un système d'échange thermique comprenant :
- des premier et deuxième échangeurs de chaleur,
- un circuit de fluide caloporteur connecté aux premier et deuxième échangeurs de chaleur,
- des premier et deuxième circuits d'air associés respectivement aux premier et deuxième échangeurs de chaleur,
- un bac de drainage comprenant un dispositif à ultrason,
- un dispositif de chauffage,
ledit procédé de réalisation comprenant les étapes consistant à :
- faire circuler un fluide caloporteur dans les premier et deuxième échangeurs de chaleur formant l'un un condenseur et l'autre un évaporateur, par l'intermédiaire du circuit de fluide caloporteur,
- faire circuler l'air situé à l'intérieur de l'espace au voisinage du premier échangeur de chaleur, par l'intermédiaire du premier circuit d'air, de sorte à réaliser un échange thermique entre le fluide caloporteur et l'air situé à l'intérieur de l'espace par l'intermédiaire du premier échangeur de chaleur, et faire circuler l'air situé à l'extérieur de l'espace au voisinage du deuxième échangeur de chaleur, par l'intermédiaire du deuxième circuit d'air, de sorte à réaliser un échange thermique entre le fluide caloporteur et l'air situé à l'extérieur de l'espace par l'intermédiaire du deuxième échangeur de chaleur,
- collecter l'eau de condensation qui se forme sur l'évaporateur dans le bac de drainage,
- chauffer l'eau de condensation collectée dans le bac de drainage, par l'intermédiaire du dispositif de chauffage,
- pulvériser sous forme de gouttelettes l'eau de condensation collectée dans le bac de drainage, par l'intermédiaire du dispositif à ultrason.

Dans un mode de réalisation dans lequel le dispositif de chauffage comprend une boucle de chauffage s'étendant au voisinage du bac de drainage et un circuit de distribution, on peut prévoir, au cours de l'étape consistant à faire circuler le fluide caloporteur, de connecter la boucle de chauffage au circuit de fluide caloporteur et de faire circuler le fluide caloporteur issu du condenseur dans la boucle de chauffage, par l'intermédiaire du circuit de distribution.

On peut également prévoir, au cours de l'étape consistant à faire circuler le fluide caloporteur, de faire circuler le fluide caloporteur issu du condenseur dans la boucle de chauffage uniquement lorsque le premier échangeur de chaleur forme le condenseur et le deuxième échangeur de chaleur forme l'évaporateur.

Dans un mode de réalisation dans lequel la boucle de chauffage présente une première extrémité connectée au premier échangeur de chaleur et une deuxième extrémité connectée au deuxième échangeur de chaleur, et le circuit de distribution comporte une conduite de dérivation connectant directement les première et deuxième extrémités de la boucle de chauffage, on peut prévoir, au cours de l'étape consistant à faire circuler le fluide caloporteur, de :
faire circuler le fluide caloporteur dans la boucle de chauffage depuis la première extrémité vers la deuxième extrémité lorsque le premier échangeur de chaleur forme le condenseur et le deuxième échangeur de chaleur forme l'évaporateur,
faire circuler le fluide caloporteur dans la conduite de dérivation depuis la deuxième extrémité vers la première extrémité lorsque le premier échangeur de chaleur forme l'évaporateur et le deuxième échangeur de chaleur forme le condenseur.

Dans un mode de réalisation dans lequel le système d'échange thermique comprend un capteur de température connecté au dispositif à ultrason, on peut prévoir, avant l'étape consistant à pulvériser l'eau de condensation collectée dans le bac de drainage, de mesurer une température de l'eau de condensation collectée dans le bac de drainage et d'activer le dispositif à ultrason lorsque ladite température dépasse une température seuil, par l'intermédiaire du capteur de température.

Dans un mode de réalisation dans lequel le système d'échange thermique comprend un capteur de hauteur d'eau connecté au dispositif à ultrason, on peut prévoir, avant l'étape consistant à pulvériser l'eau de condensation collectée dans le bac de drainage, de mesurer une hauteur de l'eau de condensation collectée dans le bac de drainage et d'activer le dispositif à ultrason lorsque ladite hauteur d'eau dépasse une hauteur seuil, par l'intermédiaire du capteur de hauteur d'eau.

Dans un mode de réalisation dans lequel le circuit d'air associé à l'évaporateur comprend une entrée d'air, une sortie d'air, et un ventilateur adapté pour, dans un état de fonctionnement, faire circuler l'air entre l'entrée d'air et la sortie d'air au travers de l'évaporateur, et le système d'échange thermique comprend un capteur d'état connecté au dispositif à ultrason, on peut prévoir, avant l'étape consistant à pulvériser l'eau de condensation collectée dans le bac de drainage, de détecter l'état du ventilateur et d'activer le dispositif à ultrason lorsque l'état de fonctionnement du ventilateur est détecté, par l'intermédiaire du capteur d'état.

D'autres objets et avantages de l'invention apparaîtront à la lecture de la description qui suit de modes de réalisation particuliers de l'invention donnés à titre d'exemple non limitatif, la description étant faite en référence aux dessins annexés dans lesquels :
- la figure 1 est une représentation schématique d'un système d'échange thermique selon un mode de réalisation de l'invention,
- la figure 2 est une représentation d'un bloc ventilo-échangeur du système d'échange thermique de la figure 1, le bloc ventilo-échangeur comprenant un ventilateur et un échangeur de chaleur placés dans un carter, un bac de drainage pour collecter l'eau de condensation qui se forme sur l'évaporateur étant solidarisé au carter,
- la figure 3 est une représentation en perspective du carter du bloc ventilo-échangeur de la figure 2, illustrant l'agencement en correspondance d'une ouverture d'admission et d'une ouverture d'évacuation du carter respectivement avec une zone amont et une zone aval du bac de drainage, un dispositif à ultrason étant placé dans la zone aval,
- la figure 4 est une représentation d'une face supérieure du bac de drainage de la figure 2, ladite face supérieure étant adaptée pour retenir l'eau de condensation,
- la figure 5 est une représentation d'une face inférieure du bac de drainage de la figure 2, une boucle de chauffage dans laquelle circule un fluide caloporteur s'étendant sur ladite face inférieure.

Sur les figures, les mêmes références désignent des éléments identiques ou analogues.

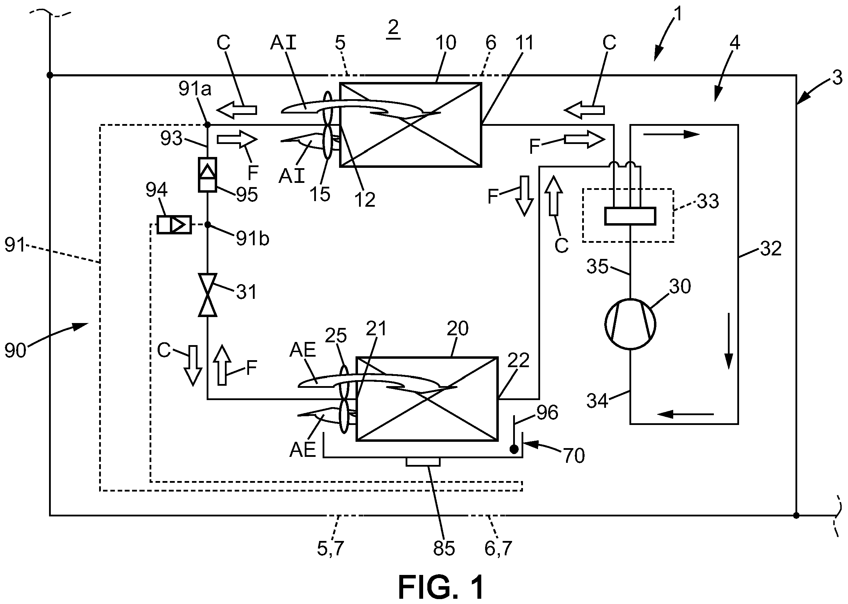

La figure 1 représente un système d'échange thermique 1 sous la forme d'une pompe à chaleur réversible air/air pour la climatisation d'un espace 2, tel qu'une pièce d'une habitation, un local technique ou autre, délimité par un sol, généralement horizontal, des parois verticales et une toiture.

Le système d'échange thermique 1 permet soit de chauffer l'espace 2 en prélevant de la chaleur à l'air extérieur situé à l'extérieur de l'espace 2 (source froide) et en transférant à l'air intérieur situé à l'intérieur de l'espace 2 (source chaude) la chaleur prélevée, soit de refroidir l'espace 2 en prélevant de la chaleur à l'air intérieur (source froide) et en transférant à l'air extérieur (source chaude) la chaleur prélevée.

Dans le mode de réalisation représenté, le système d'échange thermique comprend une enceinte 3 délimitant un logement 4 dans lequel l'ensemble des composants du système d'échange thermique 1 est placé. Un tel système d'échange thermique 1 est dit monobloc. L'enceinte 3 est placée à l'intérieur de l'espace 2 à conditionner, les échanges thermiques avec l'air intérieur et l'air extérieur étant assurés au travers d'entrées d'air 5 et de sorties d'air 6 formées sur l'enceinte 3, et de percements 7 formés dans les parois ou la toiture de l'espace 2.

Bien que décrite en relation avec un système d'échange thermique 1 monobloc, l'invention s'applique également à un système d'échange thermique 1 dit split comprenant une première enceinte disposée à l'intérieur de l'espace 2 à conditionner et recevant les composants destinés à réaliser les échanges thermiques avec l'air intérieur, et une deuxième enceinte disposée à l'extérieur de l'espace 2 à conditionner et recevant les composants destinés à réaliser les échanges thermiques avec l'air extérieur.

Les composants du système d'échange thermique 1 évoqués précédemment sont :
- un premier échangeur de chaleur 10 présentant des première 11 et deuxième 12 extrémités,
- un deuxième échangeur de chaleur 20 présentant des première 21 et deuxième 22 extrémités,
- un circuit de fluide caloporteur connecté aux premier 10 et deuxième 20 échangeurs de chaleur est adapté pour faire circuler un fluide caloporteur, tel que de l'eau glycolée, dans les premier 10 et deuxième 20 échangeurs de chaleur.

Le circuit de fluide caloporteur comporte :
- un compresseur 30 reliant, par l'intermédiaire d'une ou plusieurs conduites, la première extrémité 11 du premier échangeur de chaleur 10 à la deuxième extrémité 22 du deuxième échangeur de chaleur 20,
- un détendeur 31 reliant, par l'intermédiaire d'une ou plusieurs conduites, la deuxième extrémité 12 du premier échangeur de chaleur 10 à la première extrémité 21 du deuxième échangeur de chaleur 20, et
- un circuit de distribution permettant de faire circuler le fluide caloporteur depuis le compresseur 30 vers le premier échangeur de chaleur 10 ou depuis le compresseur 30 vers le deuxième échangeur de chaleur 20 afin d'assurer la réversibilité, ou l'inversibilité, du système d'échange thermique 1.

En particulier, le circuit de distribution comporte une boucle de compression 32 dans laquelle le compresseur 30 est placé, et une vanne quatre voies 33 reliant la boucle de compression 32 aux premier 10 et deuxième 20 échangeurs de chaleur. La vanne quatre voies 33 est adaptée pour faire circuler le fluide caloporteur provenant de l'un des premier 10 et deuxième 20 échangeurs de chaleur et entrant dans la boucle de compression 32 vers une entrée 34 du compresseur 30, et pour distribuer le fluide caloporteur provenant d'une sortie 35 du compresseur 30 vers l'autre échangeur de chaleur. Sur la figure 1, la circulation du fluide caloporteur dans la boucle de compression 32 est matérialisée par des flèches.

En fonction du sens de circulation du fluide caloporteur, le système d'échange thermique 1 peut fonctionner selon un mode pompe à chaleur ou selon un mode climatiseur.

Dans le mode pompe à chaleur représenté sur la figure 1 avec une circulation du fluide caloporteur matérialisée par des flèches référencées C, le fluide caloporteur circule en boucle fermée depuis le compresseur 30 vers le premier échangeur de chaleur 10, par l'intermédiaire de la vanne quatre voies 33, puis au travers du détendeur 31 jusqu'au deuxième échangeur de chaleur 20 avant de retourner vers le compresseur 30, par l'intermédiaire de la vanne quatre voies 33. Le deuxième échangeur de chaleur 20 forme un évaporateur prélevant de la chaleur à l'air extérieur et le premier échangeur de chaleur 10 forme un condenseur transférant la chaleur à l'air intérieur, de sorte à chauffer l'espace 2.

Dans le mode climatiseur représenté sur la figure 1 avec une circulation du fluide caloporteur matérialisée par des flèches référencées F, le fluide caloporteur circule en boucle fermée depuis le compresseur 30 vers le deuxième échangeur de chaleur 20, par l'intermédiaire de la vanne quatre voies 33, puis au travers du détendeur 31 jusqu'au premier échangeur de chaleur 10 avant de retourner vers le compresseur 30, par l'intermédiaire de la vanne quatre voies 33. Le premier échangeur de chaleur 10 forme l'évaporateur prélevant de la chaleur à l'air intérieur et le deuxième échangeur de chaleur 20 forme le condenseur transférant la chaleur à l'air extérieur, de sorte à refroidir l'espace 2.

Le système d'échange thermique 1 comprend également un premier circuit d'air associé au premier échangeur de chaleur 10 pour réaliser un échange thermique entre le fluide caloporteur et l'air situé à l'intérieur de l'espace 2 par l'intermédiaire du premier échangeur de chaleur 10. En particulier, le premier circuit d'air comprend des conduites reliées à l'entrée d'air 5 et à la sortie d'air 6 débouchant dans l'espace 2, et un ventilateur 15 placé dans le logement 4 de l'enceinte 3 adapté pour faire circuler l'air entre l'entrée d'air 5 et la sortie d'air 6 au travers du premier échangeur de chaleur 10. Sur la figure 1, la circulation de l'air intérieur au travers du premier échangeur de chaleur 10 est matérialisée par les flèches AI.

De la même manière, un deuxième circuit d'air est associé au deuxième échangeur de chaleur 20 pour réaliser un échange thermique entre le fluide caloporteur et l'air situé à l'extérieur de l'espace 2 par l'intermédiaire du deuxième échangeur de chaleur 20. En particulier, le deuxième circuit d'air comprend des conduites reliées à l'entrée d'air 5 et à la sortie d'air 6 débouchant à l'extérieur de l'espace 2, et un ventilateur 25 placé dans le logement 4 de l'enceinte 3 adapté pour faire circuler l'air entre l'entrée d'air 5 et la sortie d'air 6 au travers du deuxième échangeur de chaleur 20. Sur la figure 1, la circulation de l'air extérieur au travers du deuxième échangeur de chaleur 20 est matérialisée par les flèches AE.

Pour favoriser les échanges thermiques, au moins l'un des premier 10 et deuxième 20 échangeurs de chaleur peut être un échangeur de chaleur à ailettes agencé horizontalement dans l'enceinte. L'échangeur de chaleur à ailettes comprend une conduite d'échange et une pluralité d'ailettes qui s'étendent depuis la conduite d'échange, perpendiculairement à celle-ci. La conduite d'échange et les ailettes sont réalisées en matériau adapté pour conduire de la chaleur, tel que du métal. La conduite d'échange comprend au moins deux tubulures s'étendant dans un même plan, axialement par rapport à un axe central de l'échangeur de chaleur à ailettes, le plan étant sensiblement parallèle à un plan horizontal de l'enceinte 3. Les ailettes comprennent alors au moins deux orifices de passage adaptés chacun pour permettre le passage de l'une des tubulures de la conduite d'échange au travers des ailettes, les ailettes s'étendant transversalement par rapport à l'axe central. Le circuit d'air associé à l'échangeur de chaleur à ailettes peut alors être adapté pour faire circuler l'air selon une direction verticale perpendiculaire au plan de la conduite d'échange, au travers de l'échangeur de chaleur à ailettes.

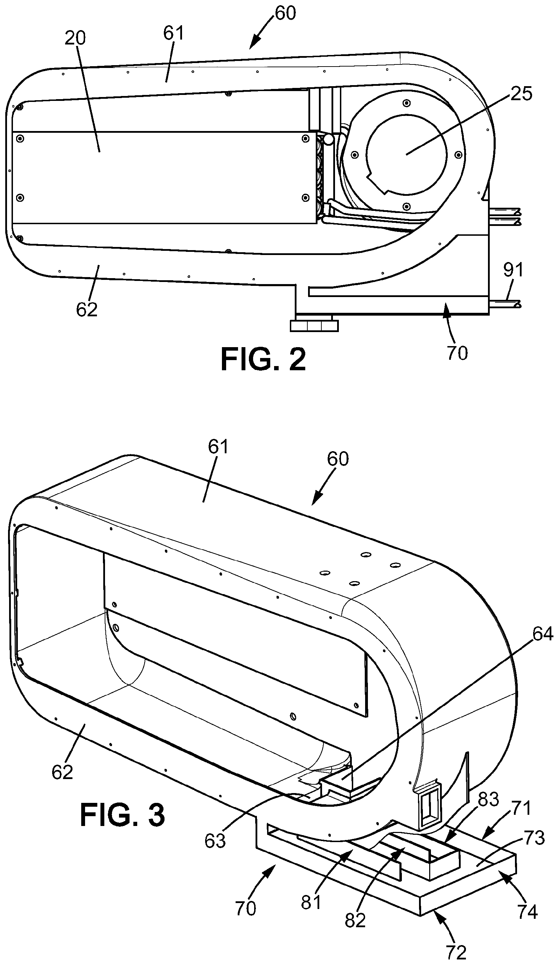

Comme représenté sur la figure 2, le deuxième échangeur de chaleur 20 et le ventilateur 25 du deuxième circuit d'air, par exemple un ventilateur de technologie centrifuge, peuvent être placés dans un carter 61, lui-même placé dans l'enceinte 3. Le deuxième échangeur de chaleur et le ventilateur 25 forment ainsi un bloc ventilo-échangeur 60. A l'intérieur du carter 61, le ventilateur 25 est placé sensiblement en regard de l'une des extrémités de la conduite d'échange du deuxième échangeur de chaleur 20. Les dispositions concernant le deuxième échangeur de chaleur 20, le deuxième circuit d'air associé et, plus généralement, le bloc ventilo-échangeur 60 sont transposables à un bloc ventilo-échangeur comprenant le premier échangeur de chaleur et le premier circuit d'air associé.

Au cours du fonctionnement, des condensats constitués de gouttes d'eau de condensation se forment sur l'échangeur de chaleur agissant comme évaporateur. Les condensats peuvent alors s'écouler le long de l'évaporateur et goutter sur une paroi inférieure 62 du carter 61. A cet égard, il est à noter que l'échangeur de chaleur réalisé sous la forme d'un échangeur de chaleur à ailettes disposé horizontalement et le circuit d'air associé réalisant une circulation d'air verticalement peuvent permettre de réaliser un drainage efficace des condensats. En effet, dans une telle réalisation, l'air circule entre les ailettes parallèlement à l'écoulement gravitationnel des condensats. Il en résulte une addition algébrique des deux forces qui s'appliquent aux gouttes d'eau de condensation pour leur élimination au niveau du bord inférieur des ailettes.

Pour récupérer les condensats et éviter qu'ils ne s'écoulent dans le système d'échange thermique 1 ou sur les parois de l'espace 2, un bac de drainage 70 est prévu pour collecter l'eau de condensation.

Sur les figures 2 et 3, le bac de drainage 70 recueillant les condensats produits à la traversée de l'évaporateur est placé en partie basse du système d'échange thermique 1, sous le deuxième échangeur de chaleur 20, au droit du ventilateur 25 assurant la circulation de l'air extérieur. Le bac de drainage 70 est, par exemple, solidaire de la paroi inférieure 62 du carter 61. La paroi inférieure 62 est inclinée vers une ouverture d'admission 63, réalisée par exemple sous la forme d'une fente visible sur la figure 3, traversant la paroi inférieure 62 pour permettre à l'eau de condensation de se déverser dans le bac de drainage 70.

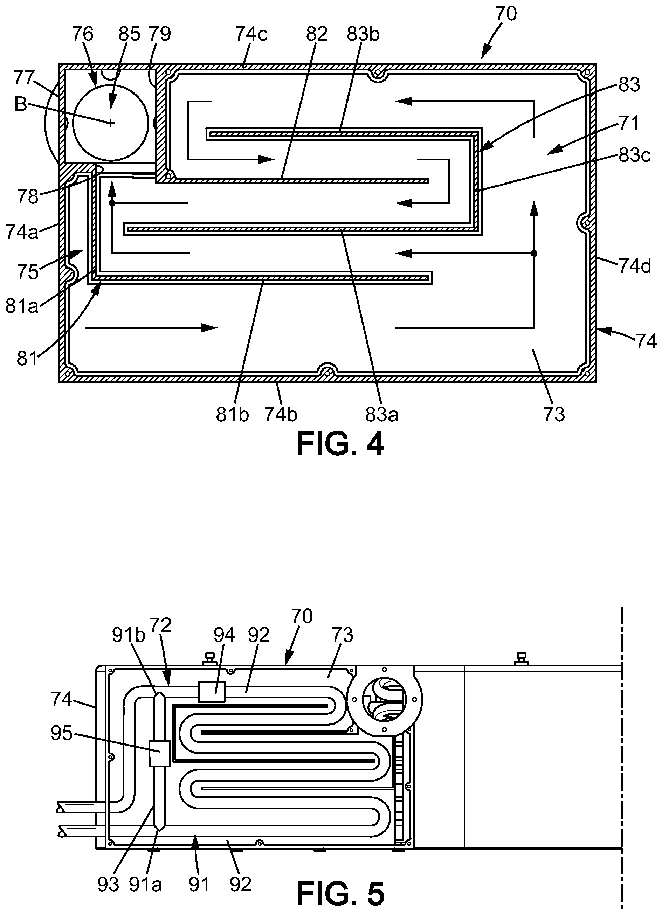

Sur les figures 3 et 4, le bac de drainage 70 présente une face supérieure 71 tournée vers le deuxième échangeur de chaleur 20 et adaptée pour retenir l'eau de condensation, et une face inférieure 72 opposée à la face supérieure 71.

Le bac de drainage 70 comporte une paroi de fond 73, par exemple rectangulaire, et une paroi latérale 74, par exemple cylindrique de section rectangulaire, s'étendant, sur la face supérieure 71, perpendiculairement à la paroi de fond 73, depuis un bord périphérique de celle-ci. La paroi de fond 73 et la paroi latérale 74 délimitent, sur la face supérieure, un espace de réception de l'eau de condensation.

A l'intérieur de l'espace de réception, le bac de drainage 70 comporte également des parois internes agencée pour définir un canal pour l'eau de condensation collectée afin de la faire circuler dans le bac de drainage 70 selon une circulation déterminée entre une zone amont 75, par laquelle l'eau de condensation entre dans l'espace de réception, et une zone aval 76.

Sur la figure 4, la zone amont 75 est formée le long d'une partie d'un premier petit côté 74a de la paroi latérale 74, au voisinage d'un coin du bac de drainage 70 formé entre le premier petit côté 74a et l'un, premier, des grands côtés 74b de la paroi latérale 74. La zone amont 75 est placée en correspondance avec l'ouverture d'admission 63 ménagée dans la paroi inférieure 72 du carter 61.

La zone aval 76 est formée sur une partie adjacente du même premier petit côté 74a, au voisinage de l'autre coin formé entre le premier petit côté 74a et l'autre, deuxième, grand côté 74c de la paroi latérale 74. La zone amont 76 comprend un boîtier 77 cylindrique selon un axe B perpendiculaire à la paroi de fond 73 du bac de drainage 70. Le boîtier 77 est creux et s'étend depuis un fond positionné en dessous la paroi de fond 73 du bac de drainage 70. Le boîtier 77 présente une ouverture latérale 78 agencée radialement par rapport à l'axe B du boîtier 77 et une ouverture supérieure 79 agencée axialement par rapport à l'axe B du boîtier 77, à distance de la paroi de fond 73 du bac de drainage 70.

Dans le mode de réalisation représenté, une première paroi interne 81 présente une forme de L dont l'une des branches 81a, la plus courte, s'étend depuis le boîtier 77, parallèlement au premier petit côté 74a, et l'autre branche 81b, la plus longue, s'étend parallèlement au premier grand côté 74b. Une deuxième paroi interne 82, droite, s'étend depuis le boîtier 77, au voisinage de l'ouverture latérale 78, parallèlement au deuxième grand côté 74c. Une troisième paroi interne 83 présente une forme de U dont deux branches parallèles 83a, 83b s'étendent respectivement entre la plus longue branche 81b de la première paroi interne 81 et la deuxième paroi interne 82, et entre la deuxième paroi interne 82 et le deuxième grand côté 74c. Une base 83c de la troisième paroi interne 83 reliant les deux branches 83a, 83b s'étend entre une extrémité de la deuxième paroi interne 82 et un deuxième petit côté 74d opposé au premier petit côté 74a.

Sur la figure 4, les première 81, deuxième 82 et troisième 83 parois internes définissent le canal, sous la forme d'un labyrinthe, le long duquel l'eau de condensation provenant de la zone amont 75 serpente jusqu'à la zone aval 76. La circulation de l'eau de condensation définie par l'agencement des première 81, deuxième 82 et troisième 83 parois internes est matérialisée par des flèches. La circulation de l'eau de condensation dans le bac de drainage 70 ainsi canalisée permet de faire parcourir à l'eau de condensation une distance allongée entre la zone amont 75 et la zone aval 76, tout en agençant ces zones amont 75 et aval 76 de manière adjacente.

L'invention n'est pas limitée à la structure précédemment décrite du bac de drainage de sorte que, notamment, le bac de drainage peut présenter toute autre forme appropriée, tout autre agencement d'une ou plusieurs parois internes ou être dépourvu de paroi interne.

Afin d'évacuer l'eau de condensation collectée dans le bac de drainage 70, un dispositif à ultrason est placé dans la zone aval 76 du bac de drainage 70. Le dispositif à ultrason 85 placé dans le fond du boîtier 77 permet de réaliser une évacuation de l'eau de condensation par brumisation ou vaporisation dans laquelle l'eau de condensation collectée dans le bac de drainage 70 est pulvérisée sous forme de gouttelettes.

Un tel dispositif à ultrason 85 comprend un organe d'excitation, tel qu'une lame métallique excitée par un convertisseur piézo-électrique. L'eau de condensation collectée dans le bac de drainage 70 entre dans le boîtier 77 par l'ouverture latérale 78 et constitue, du fait de l'agencement du fond du boîtier 77 en dessous de la paroi de fond 73 du bac de drainage 70, une couche d'eau de condensation au-dessus de l'organe d'excitation. L'organe d'excitation est mis en vibration à haute fréquence pour produire au sein de la couche d'eau de condensation des dépressions et des surpressions successives qui créent à leur tour des microbulles qui remontent vers la surface de la couche. Du bouillonnement résultant, jaillissent des gouttelettes qui forment un brouillard.

Le brouillard de gouttelettes s'élève dans le boîtier 77 et atteint l'ouverture supérieure 79 d'où elle peut ensuite être balayée par un débit d'air approprié vers l'extérieur. Dans le mode de réalisation représenté, l'ouverture supérieure 79 du boîtier est placée en correspondance avec une ouverture d'évacuation 64 ménagée sur la paroi inclinée 62 du carter 61, de manière adjacente à l'ouverture d'admission 63. Le brouillard de gouttelettes d'eau de condensation s'élevant de l'ouverture supérieure 79 du boîtier 77 entre dans le carter 61 par l'ouverture d'évacuation 64 d'où il est évacué par l'extérieur par la circulation d'air imposée par le ventilateur 25. Dans d'autres modes de réalisation, le débit d'air pourrait être obtenu d'une toute autre manière, par exemple au moyen d'un dispositif de soufflage ou d'aspiration adapté pour produire un courant d'air, par exemple horizontal, traversant la colonne de brouillard de gouttelettes.

L'évacuation par brumisation telle qu'elle vient d'être décrite présente l'avantage d'offrir une faible consommation électrique puisque l'énergie de vaporisation n'est pas assurée par le système d'échange thermique. Seul le fractionnement mécanique de l'eau de condensation est réalisé par le dispositif à ultrason 85.

La production de condensats dans le système d'échange thermique 1 est fonction de la température de l'air traversant l'évaporateur et de son hygrométrie.

En moyenne, lorsque l'air environnant l'évaporateur est au dessus de 7°C, les condensats sont maintenus à l'état liquide. La production de condensats sur l'évaporateur est continue et la température de l'eau de condensation collectée dans le bac de drainage 70 est fonction de la température de l'air environnant l'évaporateur.

En dessous de 7°C pour l'air environnant l'évaporateur, les condensats givrent sur l'évaporateur. Ceci se produit principalement en mode pompe à chaleur lorsque l'évaporateur est en contact avec l'air extérieur. Ce givre s'accumule jusqu'à recouvrir l'évaporateur et, pendant ce temps de prise en glace, aucune goutte d'eau de condensation ne s'évacue vers le bac de drainage. Pour dégivrer l'évaporateur, celui-ci est réchauffé, par exemple en inversant le sens de circulation du fluide caloporteur dans le circuit de fluide caloporteur afin que l'échangeur de chaleur fonctionnant comme évaporateur devienne le condenseur dans lequel circule le fluide caloporteur qui a prélevé de la chaleur. Ce phénomène de dégivrage de l'évaporateur, au cours duquel les condensats sont liquéfiés, induit une production instantanée de condensats. L'eau de condensation collectée dans le bac de drainage est alors à une température inférieure à 4°C.

Sur les figures 1 et 5, le système d'échange thermique 1 comprend également un dispositif de chauffage 90 permettant de chauffer l'eau de condensation collectée dans le bac de drainage 70 et de la porter à une température permettant d'optimiser le phénomène de cavitation et ainsi d'améliorer l'évacuation de l'eau de condensation par brumisation. En effet, plus la température est faible, moins importante sera la quantité d'eau de condensation traitée. En outre, les dispositifs à ultrason 85 connus sont donnés pour fonctionner dans une plage de température d'eau de condensation comprise entre 0°C et 45°C.

Dans le mode de réalisation représenté, le dispositif de chauffage 90 comprend une boucle de chauffage 91, représentée schématiquement par un trait discontinu sur la figure 1, et un circuit de distribution adapté pour connecter la boucle de chauffage 91 au circuit de fluide caloporteur.

Afin d'utiliser la chaleur prélevée par le système d'échange thermique 1, le circuit de distribution est adapté pour faire circuler le fluide caloporteur issu du condenseur, constituant un fluide de chauffage, dans la boucle de chauffage 91.

Comme représenté sur la figure 1, la boucle de chauffage 91 présente une première extrémité 91a connectée à la deuxième extrémité 12 du premier échangeur de chaleur 10 et une deuxième extrémité 91b connectée à la première extrémité 21 du deuxième échangeur de chaleur 20, entre la première extrémité 91a et le détendeur 31. La boucle de chauffage 91 s'étend sur la face inférieure 72 du bac de drainage 70, au voisinage, éventuellement en contact, avec la paroi de fond 73. Comme on peut le voir sur la figure 5, la boucle de chauffage 91 comporte plusieurs tubes 92 parallèles entre eux et dans lesquels circule le fluide caloporteur. En particulier, la face inférieure 72 du bac de drainage 70 est pourvue de parois placées en correspondance avec les première 81, deuxième 82 et troisième 83 parois internes de la face supérieure 71 et entre lesquelles la boucle de chauffage 91 serpente. Les tubes 92 de la boucle de chauffage 91 s'étendent alors en correspondance avec le canal le long duquel circule l'eau de condensation dans le bac de drainage afin de la réchauffer tout au long de son parcours. Une telle architecture permet d'assurer une bonne exploitation de la bouche de chauffage 91 tout en étant isolé de l'air extérieur de sorte à optimiser le réchauffement des condensats avant brumisation.

Comme il apparaît de ce qui précède, la température de l'eau de condensation dépend de la température de l'air environnant l'évaporateur, la température de l'eau de condensation étant d'autant plus froide que la température de l'air environnant l'évaporateur est froide. Par conséquent, la température de l'eau de condensation est généralement plus froide dans le mode pompe à chaleur, lorsque l'évaporateur formé par le deuxième échangeur de chaleur 20 est en contact l'air extérieur.

Le circuit de distribution comprend alors des composants permettant de faire circuler le fluide caloporteur dans la boucle de chauffage uniquement dans le mode pompe à chaleur. A cette fin, le circuit de distribution comporte :
- une conduite de dérivation 93 connectant directement les première 91a et deuxième 91b extrémités de la boucle de chauffage 91,
- une premier clapet anti-retour 94 placé dans la boucle de chauffage 91 au voisinage de la deuxième extrémité 91b, le premier clapet anti-retour 94 présentant un sens passant de la première extrémité 91a vers la deuxième extrémité 91b et un sens bloquant de la deuxième extrémité 91b vers la première extrémité 91a,
- une deuxième clapet anti-retour 95 placé dans la conduite de dérivation 93, le deuxième clapet anti-retour 95 présentant un sens passant de la deuxième extrémité 91b vers la première extrémité 91a et un sens bloquant de la première extrémité 91a vers la deuxième extrémité 91b.

Pour assurer un fonctionnement optimal et sécurisé, le système d'échange thermique 1 comprend un capteur de température 96 placé dans le bac de drainage 70 pour mesurer la température de l'eau de condensation collectée dans le bac de drainage 70. Le capteur de température 96 est alors connecté au dispositif à ultrason 85 via une unité de commande qui active le dispositif à ultrason 85 lorsque la température de l'eau de condensation dans le bac de drainage dépasse une température seuil, définissant l'entrée dans une plage de température assurant une évacuation optimale des condensats. Cette température seuil peut être entrée dans l'unité de commande en fonction du système d'échange thermique et de ses composants.

Par ailleurs, afin de s'assurer qu'une hauteur d'eau suffisante se trouve dans le bac de drainage 70 pour éviter une détérioration du dispositif à ultrason et permettre une évacuation optimale, le système d'échange thermique 1 peut également comprendre un capteur de hauteur d'eau placé dans le bac de drainage 70 pour mesurer la hauteur de l'eau de condensation collectée. Le capteur de hauteur d'eau permet de s'assurer que de l'eau est présente dans le bac de drainage 70, au dessus du dispositif à ultrason, et de vérifier que la hauteur d'eau est optimale pour réalisée l'évacuation par brumisation. Le capteur de hauteur d'eau connecté au dispositif à ultrason 85, via l'unité de commande, peut alors activer le dispositif à ultrason 85 lorsque la hauteur d'eau de condensation dépasse une hauteur seuil, prédéterminée, et se situe par exemple dans une plage comprise entre 30 mm et 50 mm.

Un capteur d'état adapté pour détecter l'état du ventilateur du circuit d'air associé à l'évaporateur peut aussi être prévu et connecté au dispositif à ultrason 85 par l'intermédiaire de l'unité centrale pour activer le dispositif à ultrason 85 lorsque le ventilateur est dans un état de fonctionnement dans lequel il fait circuler de l'air dans l'évaporateur.

Ainsi, le système d'échange thermique tel que décrit précédemment permet de réaliser des échanges thermiques entre de l'air situé à l'intérieur d'un espace et de l'air situé à l'extérieur de l'espace selon le procédé suivant.

Dans un fonctionnement en pompe à chaleur, le circuit de fluide caloporteur fait circuler le fluide caloporteur dans le deuxième échangeur de chaleur 20, formant l'évaporateur. Le ventilateur 25 du deuxième circuit d'air fait circuler l'air extérieur au travers du deuxième échangeur de chaleur 20 de sorte à prélever de la chaleur à l'air extérieur. Le capteur d'état détecte alors l'état de fonctionnement du ventilateur 25.

Le fluide caloporteur circule ensuite dans le premier échangeur de chaleur 10, via la boucle de compression 32, lequel premier échangeur de chaleur 10 forme le condenseur. Le ventilateur 15 du premier circuit d'air fait circuler l'air intérieur au travers du premier échangeur de chaleur 10 de sorte à transférer à l'air intérieur la chaleur prélevée.

En sortie du premier échangeur de chaleur 10, le fluide caloporteur entre dans la boucle de chauffage 91 dont la première extrémité 91a est connectée au circuit de fluide caloporteur par le circuit de distribution. Le fluide caloporteur passe dans la boucle de chauffage 91, le deuxième clapet anti-retour 95 empêchant le fluide caloporteur de passer dans la conduite de dérivation 93. Le premier clapet anti-retour 94 autorise le passage du fluide caloporteur vers la deuxième extrémité 91b de la boucle de chauffage 91 d'où il sort de la boucle de chauffage 91 pour, après avoir traversé le détendeur 31, rejoindre le deuxième échangeur de chaleur 20 et commencer un nouveau cycle.

Les condensats produits sur le deuxième échangeur de chaleur 20 sont tombent sur la paroi inférieure 62 du carter 61 puis dans la zone aval 75 du bac de drainage 70 au travers de l'ouverture d'admission 63. L'eau de condensation ainsi collectée circule dans le canal du bac de drainage 70 le long d'un parcours au cours duquel elle est chauffée par la boucle de chauffage 91, jusqu'à la zone amont 76 du bac de drainage 70.

La température et la hauteur de l'eau de condensation collectée dans le bac de drainage 70 peuvent alors être mesurées par le capteur de température 96 et le capteur de hauteur d'eau. Si la température dépasse une température seuil ou est située dans une plage de température déterminée et si la hauteur d'eau dépasse une hauteur seuil ou est située dans une plage de hauteur d'eau déterminée, le capteur d'état ayant détecté l'état de fonctionnement du ventilateur 25, l'unité de commande active le dispositif à ultrason 85. A défaut, afin de préserver le dispositif à ultrason 85 de toute dégradation, celui-ci n'est pas activé, jusqu'à ce qu'une action correctrice concernant la température ou la hauteur de l'eau de condensation collectée, ou l'état du ventilateur 25 soit réalisée.

Dans la zone amont, l'eau de condensation qui entre dans le boîtier 77 par l'ouverture latérale 78 est pulvérisée par le dispositif à ultrason 85, le brouillard ainsi formée est évacuée par l'ouverture supérieure 79 du boîtier 77 et l'ouverture d'évacuation 64 du carter où il est balayé vers l'extérieur par le débit d'air imposé par le ventilateur 25 du deuxième circuit d'air.

Dans un mode climatiseur, le circuit de fluide caloporteur fait circuler le fluide caloporteur dans le premier échangeur de chaleur 10, formant l'évaporateur. Le premier circuit d'air fait circuler l'air intérieur au travers du premier échangeur de chaleur 10 de sorte à prélever de la chaleur à l'air intérieur.

Le fluide caloporteur circule ensuite dans le deuxième échangeur de chaleur 20, via la boucle de compression 32, lequel deuxième échangeur de chaleur 20 forme le condenseur. Le ventilateur 25 du deuxième circuit d'air fait circuler l'air extérieur au travers du deuxième échangeur de chaleur 20 de sorte à transférer à l'air extérieur la chaleur prélevée.

En sortie du deuxième échangeur de chaleur 20, le fluide caloporteur traverse le détendeur 31, entre dans la conduite de dérivation 93 par la deuxième extrémité 91b de la boucle de chauffage 91 et atteint directement la première extrémité 91a de la boucle de chauffage 91 au travers du deuxième clapet-anti-retour 95 dans son sens passant, sans passer dans la boucle de chauffage 91, le premier clapet anti-retour 94 en interdisant l'accès. En effet, la température de condensats est généralement suffisante pour pouvoir se passer du chauffage de l'eau de condensation dans le bac de drainage 70. Le fluide caloporteur retourne ensuite au premier échangeur de chaleur 10 pour un nouveau cycle.

Les condensats produits sur le premier échangeur de chaleur 10 peuvent être collectés et évacués comme décrit précédemment en relation avec le deuxième échangeur de chaleur 20 agissant comme évaporateur, les dispositions relatives au deuxième échangeur de chaleur 20 concernant la collecte et l'évacuation des condensats étant transposables au premier échangeur de chaleur 10. En particulier, les condensats produits sur le premier échangeur de chaleur 10 peuvent soit être acheminés vers le même bac de drainage 70 que celui du deuxième échangeur de chaleur 20 soit vers un bac de drainage distinct présentant des caractéristiques analogues.

En variante, on pourrait prévoir de chauffer les condensats également dans le mode climatiseur.

L'invention n'est pas limitée au dispositif de chauffage décrit précédemment, notamment en termes d'agencement et de réalisation. En particulier, tout autre agencement de la boucle de chauffage au voisinage du bac de drainage 70 peut être prévu. La boucle de chauffage pourrait par exemple s'étendre dans le canal du bac de drainage 70, autour ou dans la paroi latérale 74 du bac de drainage 70, ou encore dans la paroi de fond 73 du bac de drainage 70.

## Revendications

1. Système d'échange thermique (1) entre de l'air situé à l'intérieur d'un espace (2) et de l'air situé à l'extérieur de l'espace (2), comprenant :
- des premier (10) et deuxième (20) échangeurs de chaleur formant l'un un condenseur et l'autre un évaporateur,
- un circuit de fluide caloporteur connecté aux premier (10) et deuxième (20) échangeurs de chaleur et adapté pour faire circuler un fluide caloporteur dans lesdits premier (10) et deuxième (20) échangeurs de chaleur,
- un premier circuit d'air associé au premier échangeur de chaleur (10) pour réaliser un échange thermique entre le fluide caloporteur et l'air situé à l'intérieur de l'espace (2) par l'intermédiaire du premier échangeur de chaleur (10), et un deuxième circuit d'air associé au deuxième échangeur de chaleur (20) pour réaliser un échange thermique entre le fluide caloporteur et l'air situé à l'extérieur de l'espace (2) par l'intermédiaire du deuxième échangeur de chaleur (20),
- un bac de drainage (70) agencé pour collecter de l'eau de condensation qui se forme sur l'évaporateur, ledit bac de drainage (70) comprenant un dispositif à ultrason (85) adapté pour pulvériser sous forme de gouttelettes l'eau de condensation collectée dans le bac de drainage (70),
ledit système d'échange thermique (1) étant **caractérisé en ce qu'**il comprend un dispositif de chauffage (90) adapté pour chauffer l'eau de condensation collectée dans le bac de drainage (70), le dispositif de chauffage (90) comprenant :
- une boucle de chauffage (91) dans laquelle circule un fluide de chauffage, ladite boucle de chauffage (91) s'étendant au voisinage du bac de drainage (70),
- un circuit de distribution adapté pour connecter la boucle de chauffage (91) au circuit de fluide caloporteur, ledit circuit de distribution étant adapté pour faire circuler le fluide caloporteur issu du condenseur, comme fluide de chauffage, dans la boucle de chauffage (91).

2. Système d'échange thermique (1) selon la revendication 1, dans lequel le circuit de distribution est adapté pour faire circuler le fluide caloporteur dans la boucle de chauffage (91) uniquement lorsque le premier échangeur de chaleur (10) forme le condenseur et le deuxième échangeur de chaleur (20) forme l'évaporateur.

3. Système d'échange thermique (1) selon la revendication 2, dans lequel la boucle de chauffage (91) présente une première extrémité (91a) connectée au premier échangeur de chaleur (10) et une deuxième extrémité (91b) connectée au deuxième échangeur de chaleur (20), le circuit de distribution comportant une conduite de dérivation (93) connectant directement les première (91a) et deuxième (91b) extrémités de la boucle de chauffage (91), le circuit de distribution étant adapté pour :
- faire circuler le fluide caloporteur dans la boucle de chauffage (91) depuis la première extrémité (91a) vers la deuxième extrémité (91b) lorsque le premier échangeur de chaleur (10) forme le condenseur et le deuxième échangeur de chaleur (20) forme l'évaporateur,
- faire circuler le fluide caloporteur dans la conduite de dérivation (93) depuis la deuxième extrémité (91b) vers la première extrémité (91a) lorsque le premier échangeur de chaleur (10) forme l'évaporateur et le deuxième échangeur de chaleur (20) forme le condenseur.

4. Système d'échange thermique (1) selon l'une quelconque des revendications 1 à 3, dans lequel le bac de drainage (70) présente une face supérieure (71) adaptée pour retenir l'eau de condensation et une face inférieure (72) opposée à la face supérieure (71), la boucle de chauffage (91) s'étend sur la face inférieure (72) du bac de drainage (70).

5. Système d'échange thermique (1) selon l'une quelconque des revendications 1 à 4, dans lequel le bac de drainage (70) comporte une paroi de fond (73) et une paroi latérale (74) s'étendant perpendiculairement depuis la paroi de fond (73), la paroi de fond (73) et la paroi latérale (74) délimitant un espace de réception de l'eau de condensation, le bac de drainage (70) comportant en outre au moins une paroi interne (81, 82, 83) agencée dans l'espace de réception pour définir un canal pour l'eau de condensation collectée, ledit canal présentant une zone amont (75), par laquelle l'eau de condensation entre dans l'espace de réception, et une zone aval (76), dans laquelle le dispositif à ultrason (85) est placé, le canal étant placé en correspondance avec la boucle de chauffage (91).

6. Système d'échange thermique (1) selon l'une quelconque des revendications 1 à 5, comprenant un capteur de température (96) adapté pour mesurer une température de l'eau de condensation collectée dans le bac de drainage (70), ledit capteur de température (96) étant connecté au dispositif à ultrason (85) pour activer ledit dispositif à ultrason (85) lorsque ladite température dépasse une température seuil.

7. Système d'échange thermique (1) selon l'une quelconque des revendications 1 à 6, comprenant un capteur de hauteur d'eau adapté pour mesurer une hauteur de l'eau de condensation collectée dans le bac de drainage (70), ledit capteur de hauteur d'eau étant connecté au dispositif à ultrason (85) pour activer ledit dispositif à ultrason (85) lorsque ladite hauteur d'eau dépasse une hauteur seuil.

8. Système d'échange thermique (1) selon l'une quelconque des revendications 1 à 7, dans lequel le circuit d'air associé à l'évaporateur comprend une entrée d'air (5), une sortie d'air (6), et un ventilateur (15, 25) adapté pour, dans un état de fonctionnement, faire circuler l'air entre l'entrée d'air (5) et la sortie d'air (6) au travers de l'évaporateur, le système d'échange thermique comprenant un capteur d'état adapté pour détecter l'état du ventilateur (15, 25), ledit capteur d'état étant connecté au dispositif à ultrason (85) pour activer ledit dispositif à ultrason (85) lorsque l'état de fonctionnement du ventilateur (15, 25) est détecté.

9. Procédé de réalisation d'échange thermique entre de l'air situé à l'intérieur d'un espace (2) et de l'air situé à l'extérieur de l'espace (2), ledit procédé de réalisation mettant en œuvre un système d'échange thermique (1) comprenant :
- des premier (10) et deuxième (20) échangeurs de chaleur,
- un circuit de fluide caloporteur connecté aux premier (10) et deuxième (20) échangeurs de chaleur,
- des premier et deuxième circuits d'air associés respectivement aux premier (10) et deuxième (20) échangeurs de chaleur,
- un bac de drainage (70) comprenant un dispositif à ultrason (85),
- un dispositif de chauffage (90), le dispositif de chauffage (90) comprenant une boucle de chauffage (91) s'étendant au voisinage du bac de drainage (70) et un circuit de distribution,
ledit procédé de réalisation comprenant les étapes consistant à :
- faire circuler un fluide caloporteur dans les premier (10) et deuxième (20) échangeurs de chaleur formant l'un un condenseur et l'autre un évaporateur, par l'intermédiaire du circuit de fluide caloporteur, la boucle de chauffage (91) étant connectée au circuit de fluide caloporteur et le fluide caloporteur issu du condenseur circulant dans la boucle de chauffage (91), par l'intermédiaire du circuit de distribution,
- faire circuler l'air situé à l'intérieur de l'espace (2) au voisinage du premier échangeur de chaleur (10), par l'intermédiaire du premier circuit d'air, de sorte à réaliser un échange thermique entre le fluide caloporteur et l'air situé à l'intérieur de l'espace (2) par l'intermédiaire du premier échangeur de chaleur (10), et faire circuler l'air situé à l'extérieur de l'espace (2) au voisinage du deuxième échangeur de chaleur (20), par l'intermédiaire du deuxième circuit d'air, de sorte à réaliser un échange thermique entre le fluide caloporteur et l'air situé à l'extérieur de l'espace (2) par l'intermédiaire du deuxième échangeur de chaleur (20),
- collecter l'eau de condensation qui se forme sur l'évaporateur dans le bac de drainage (70),
- chauffer l'eau de condensation collectée dans le bac de drainage (70), par l'intermédiaire du dispositif de chauffage (90),
- pulvériser sous forme de gouttelettes l'eau de condensation collectée dans le bac de drainage (70), par l'intermédiaire du dispositif à ultrason (85).

10. Procédé de réalisation d'échange thermique selon la revendication 9, dans lequel au cours de l'étape consistant à faire circuler le fluide caloporteur, on fait circuler le fluide caloporteur issu du condenseur dans la boucle de chauffage (91) uniquement lorsque le premier échangeur de chaleur (10) forme le condenseur et le deuxième échangeur de chaleur (20) forme l'évaporateur.

11. Procédé de réalisation d'échange thermique selon la revendication 10, dans lequel :
- on prévoit que la boucle de chauffage (91) présente une première extrémité (91a) connectée au premier échangeur de chaleur (10) et une deuxième extrémité (91b) connectée au deuxième échangeur de chaleur (20), et que le circuit de distribution comporte une conduite de dérivation (93) connectant directement les première (91a) et deuxième (91b) extrémités de la boucle de chauffage (91),
- au cours de l'étape consistant à faire circuler le fluide caloporteur :
on fait circuler le fluide caloporteur dans la boucle de chauffage (91) depuis la première extrémité (91a) vers la deuxième extrémité (91b) lorsque le premier échangeur de chaleur (10) forme le condenseur et le deuxième échangeur de chaleur (20) forme l'évaporateur,
on fait circuler le fluide caloporteur dans la conduite de dérivation (93) depuis la deuxième extrémité (91b) vers la première extrémité (91a) lorsque le premier échangeur de chaleur (10) forme l'évaporateur et le deuxième échangeur de chaleur (20) forme le condenseur.

12. Procédé de réalisation d'échange thermique selon l'une quelconque des revendications 9 à 11, dans lequel :
- on prévoit que le système d'échange thermique (1) comprenne un capteur de température (96) connecté au dispositif à ultrason (85),
- avant l'étape consistant à pulvériser l'eau de condensation collectée dans le bac de drainage (70), on mesure une température de l'eau de condensation collectée dans le bac de drainage (70) et on active le dispositif à ultrason (85) lorsque ladite température dépasse une température seuil, par l'intermédiaire du capteur de température (96).

13. Procédé de réalisation d'échange thermique selon l'une quelconque des revendications 9 à 12, dans lequel :
- on prévoit que le système d'échange thermique (1) comprenne un capteur de hauteur d'eau connecté au dispositif à ultrason (85),
- avant l'étape consistant à pulvériser l'eau de condensation collectée dans le bac de drainage (70), on mesure une hauteur de l'eau de condensation collectée dans le bac de drainage (70) et on active le dispositif à ultrason (85) lorsque ladite hauteur d'eau dépasse une hauteur seuil, par l'intermédiaire du capteur de hauteur d'eau.

14. Procédé de réalisation d'échange thermique selon l'une quelconque des revendications 9 à 13, dans lequel :
- on prévoit que le circuit d'air associé à l'évaporateur comprenne une entrée d'air (5), une sortie d'air (6), et un ventilateur (15, 25) adapté pour, dans un état de fonctionnement, faire circuler l'air entre l'entrée d'air (5) et la sortie d'air (6) au travers de l'évaporateur, et que le système d'échange thermique comprenne un capteur d'état connecté au dispositif à ultrason (85),
- avant l'étape consistant à pulvériser l'eau de condensation collectée dans le bac de drainage (70), on détecte l'état du ventilateur (15, 25) et on active le dispositif à ultrason (85) lorsque l'état de fonctionnement du ventilateur (15, 25) est détecté, par l'intermédiaire du capteur d'état.

## Patentansprüche

1. Wärmeaustauschsystem (1) zum Austauschen von Wärme zwischen Luft, die innerhalb eines Raums (2) vorhanden ist, und Luft, die außerhalb des Raums (2) vorhanden ist, aufweisend:
- einen ersten (10) und zweiten (20) Wärmetauscher, von denen der eine einen Kondensator und der andere einen Verdampfer bildet,
- einen Wärmeträgerfluid-Kreislauf, der mit dem ersten (10) und zweiten (20) Wärmetauscher verbunden ist und eingerichtet ist, ein Wärmeträgerfluid in dem ersten (10) und zweiten (20) Wärmetauscher zirkulieren zu lassen,
- einen mit dem ersten Wärmetauscher (10) assoziierten ersten Luftkreislauf zum Durchführen eines Wärmetausches zwischen dem Wärmeträgerfluid und der innerhalb des Raums (2) vorhandenen Luft mit Hilfe des ersten Wärmetauschers (10), und einen mit dem zweiten Wärmetauscher (20) assoziierten zweiten Luftkreislauf zum Durchführen eines Wärmetausches zwischen dem Wärmeträgerfluid und der außerhalb des Raums (2) vorhandenen Luft mit Hilfe des zweiten Wärmetauschers (20),
- eine Entwässerungswanne (70), die konfiguriert ist, um Kondensationswasser zu sammeln, das sich an dem Verdampfer bildet, wobei die Entwässerungswanne (70) eine Ultraschallvorrichtung (85) aufweist, die eingerichtet ist, das in der Entwässerungswanne (70) gesammelte Kondensationswasser in Form von Tröpfchen zu zerstäuben,
wobei das Wärmeaustauschsystem (1) **dadurch gekennzeichnet ist, dass** es eine Heizvorrichtung (90) aufweist, die eingerichtet ist, das in der Entwässerungswanne (70) gesammelte Kondensationswasser zu erhitzen, wobei die Heizvorrichtung (90) aufweist:
- eine Heizschleife (91), in der ein Heizfluid zirkuliert, wobei die Heizschleife (91) sich in der Nähe der Entwässerungswanne (70) erstreckt,
- einen Verteilungskreislauf, der eingerichtet ist, die Heizschleife (91) mit dem Wärmeträgerfluid-Kreislauf zu verbinden, wobei der Verteilungskreislauf eingerichtet ist, das aus dem Kondensator stammende Wärmeträgerfluid als Heizfluid in der Heizschleife (91) zirkulieren zu lassen.

2. Wärmeaustauschsystem (1) nach Anspruch 1, in welchem der Verteilungskreislauf eingerichtet ist, das Wärmeträgerfluid nur dann in der Heizschleife (81) zirkulieren zu lassen, wenn der erste Wärmetauscher (10) den Kondensator bildet und der zweite Wärmetauscher (20) den Verdampfer bildet.

3. Wärmeaustauschsystem (1) nach Anspruch 2, in welchem die Heizschleife (91) ein mit dem ersten Wärmetauscher (10) verbundenes erstes Ende (91a) und ein mit dem zweiten Wärmetauscher (20) verbunden zweites Ende (91b) aufweist, wobei der Verteilungskreislauf eine Umgehungsleitung (93) aufweist, die das erste (91a) und das zweite (91b) Ende der Heizschleife (91) direkt miteinander verbindet, wobei der Verteilungskreislauf eingerichtet ist, um:
- das Wärmeträgerfluid in der Heizschleife (91) von dem ersten Ende (91a) zu dem zweiten Ende (91b) zirkulieren zu lassen, wenn der erste Wärmetauscher (10) den Kondensator bildet und der zweite Wärmetauscher (20) den Verdampfer bildet,
- das Wärmeträgerfluid in der Umgehungsleitung (93) von dem zweiten Ende (91b) zu dem ersten Ende (91a) zirkulieren zu lassen, wenn der erste Wärmetauscher (10) den Verdampfer bildet und der zweite Wärmetauscher (20) den Kondensator bildet.

4. Wärmeaustauschsystem (1) nach einem der Ansprüche 1 bis 3, in welchem die Entwässerungswanne (70) eine obere Oberfläche (71), die eingerichtet ist, das Kondensationswasser zurückzuhalten, und eine der oberen Oberfläche (71) gegenüberliegende untere Oberfläche (72) aufweist, wobei die Heizschleife (91) sich an der unteren Oberfläche (72) der Entwässerungswanne (70) erstreckt.

5. Wärmeaustauschsystem (1) nach einem der Ansprüche 1 bis 4, in welchem die Entwässerungswanne (70) eine Bodenwand (73) und eine sich von der Bodenwand (73) senkrecht erstreckende Seitenwand (74) aufweist, wobei die Bodenwand (73) und die Seitenwand (74) einen Aufnahmeraum zum Aufnehmen des Kondensationswassers begrenzen, wobei die Entwässerungswanne (70) außerdem mindestens eine Innenwand (81, 82, 83) aufweist, die in dem Aufnahmeraum angeordnet ist, um einen Kanal für das gesammelte Kondensationswasser zu definieren, wobei der Kanal eine stromaufwärtsseitige Zone (75), über die das Kondensationswasser in den Aufnahmeraum eintritt, und eine stromabwärtsseitige Zone (76), in der die Ultraschallvorrichtung (85) angeordnet ist, aufweist, und der Kanal mit Bezug auf die Heizschleife (91) angeordnet ist.

6. Wärmeaustauschsystem (1) nach einem der Ansprüche 1 bis 5, aufweisend einen Temperatursensor (96) eingerichtet zum Messen einer Temperatur des in der Entwässerungswanne (70) gesammelten Kondensationswassers, wobei der Temperatursensor (96) mit der Ultraschallvorrichtung (85) verbunden ist, um die Ultraschallvorrichtung (85) zu aktivieren, wenn die Temperatur eine Temperaturschwelle überschreitet.

7. Wärmeaustauschsystem (1) nach einem der Ansprüche 1 bis 6, aufweisend einen Wasserstandsensor eingerichtet zum Messen eines Wasserstands des in der Entwässerungswanne (70) gesammelten Kondensationswassers, wobei der Wasserstandsensor (96) mit der Ultraschallvorrichtung (85) verbunden ist, um die Ultraschallvorrichtung (85) zu aktivieren, wenn der Wasserstand eine Wasserstandschwelle überschreitet.

8. Wärmeaustauschsystem (1) nach einem der Ansprüche 1 bis 7, in welchem der mit dem Verdampfer assoziierte Luftkreislauf einen Lufteingang (5), einen Luftausgang (6) und einen Ventilator (15, 25) aufweist, der eingerichtet ist, um in einem Betriebszustand die Luft zwischen dem Lufteingang (5) und dem Luftausgang (6) über den Verdampfer hinweg zirkulieren zu lassen, wobei das Wärmeaustauschsystem einen Zustandsdetektor eingerichtet zum Detektieren des Zustands des Ventilators (15, 25) aufweist, wobei der Zustandsdetektor mit der Ultraschallvorrichtung (85) verbunden ist, um die Ultraschallvorrichtung (85) zu aktivieren, wenn der Betriebszustand des Ventilators (15, 25) detektiert worden ist.

9. Verfahren zum Durchführen eines Wärmeaustausches zwischen Luft, die innerhalb eines Raums (2) vorhanden ist, und Luft, die außerhalb des Raums (2) vorhanden ist, wobei das Durchführungsverfahren von einem Wärmeaustauschsystem (1) Gebrauch macht, das aufweist:
- einen ersten (10) und zweiten (20) Wärmetauscher,
- einen Wärmeträgerfluid-Kreislauf, der mit dem ersten (10) und zweiten (20) Wärmetauscher verbunden ist,
- einen ersten und zweiten Luftkreislauf, der mit dem ersten Wärmetauscher (10) bzw. zweiten Wärmetauscher (20) assoziiert ist,
- eine Entwässerungswanne (70), die eine Ultraschallvorrichtung (85) aufweist,
- eine Heizvorrichtung (90), wobei die Heizvorrichtung (90) eine sich in der Nähe der Entwässerungswanne (70) erstreckende Heizschleife (91) und einen Verteilungskreislauf aufweist,
wobei das Durchführungsverfahren die folgenden Schritte aufweist:
- Zirkulieren eines Wärmeträgerfluides in dem ersten (10) und zweiten (20) Wärmetauscher, von denen der eine einen Kondensator und der andere einen Verdampfer bildet, mit Hilfe des Wärmeträgerfluid-Kreislaufs, wobei die Heizschleife (91) mit dem Wärmeträgerfluid-Kreislauf verbunden ist und das aus dem Kondensator stammende Wärmeträgerfluid mit Hilfe des Verteilungskreislaufs in der Heizschleife zirkuliert,
- Zirkulieren der innerhalb des Raums (2) vorhandenen Luft in der Nähe des ersten Wärmetauschers (10) mit Hilfe des ersten Luftkreislaufs, derart, um mit Hilfe des ersten Wärmetauschers (10) einen Wärmeaustausch zwischen dem Wärmeträgerfluid und der innerhalb des Raums (2) vorhandenen Luft durchzuführen, und Zirkulieren der außerhalb des Raums (2) vorhandenen Luft in der Nähe des zweiten Wärmetauschers (20) mit Hilfe des zweiten Luftkreislaufs, derart, um mit Hilfe des zweiten Wärmetauschers (20) einen Wärmeaustausch zwischen dem Wärmeträgerfluid und der außerhalb des Raums (2) vorhandenen Luft durchzuführen,
- Sammeln des Kondensationswassers, das sich an dem Verdampfer bildet, in der Entwässerungswanne (70),
- Erhitzen des in der Entwässerungswanne (70) gesammelten Kondensationswassers mit Hilfe der Heizvorrichtung (90),
- Zerstäuben des in der Entwässerungswanne (70) gesammelten Kondensationswassers in Form von Tröpfchen mit Hilfe der Ultraschallvorrichtung (85).

10. Verfahren zum Durchführen eines Wärmeaustausches nach Anspruch 9, in welchem im Verlaufe des Schritts, der darin besteht, das Wärmträgerfluid zu zirkulieren, man das aus dem Kondensator stammende Wärmeträgerfluid nur dann in der Heizschleife (91) zirkulieren lässt, wenn der erste Wärmetauscher (10) den Kondensator bildet und der zweite Wärmetauscher (20) den Verdampfer bildet.

11. Verfahren zum Durchführen eines Wärmeaustausches nach Anspruch 10, in welchem:
- vorgesehen ist, dass die Heizschleife (91) ein mit dem ersten Wärmetauscher (10) verbundenes erstes Ende (91a) und ein mit dem zweiten Wärmetauscher (20) verbundenes zweites Ende (91b) aufweist, und dass der Verteilungskreislauf eine Umgehungsleitung (93) aufweist, die das erste (91a) und das zweite (91b) Ende der Heizschleife (91) direkt miteinander verbindet,
- im Verlaufe des Schritts, der darin besteht, das Wärmeträgerfluid zu zirkulieren:
man das Wärmeträgerfluid in der Heizschleife (91) von dem ersten Ende (91a) zu dem zweiten Ende (91b) zirkulieren lässt, wenn der erste Wärmetauscher (10) den Kondensator bildet und der zweite Wärmetauscher (20) den Verdampfer bildet,
man das Wärmeträgerfluid in der Umgehungsleitung (93) von dem zweiten Ende (91b) zu dem ersten Ende (91a) zirkulieren lässt, wenn der erste Wärmetauscher (10) den Verdampfer bildet und der zweite Wärmetauscher (20) den Kondensator bildet.

12. Verfahren zum Durchführen eines Wärmeaustausches nach einem der Ansprüche 9 bis 11, in welchem:
- vorgesehen ist, dass das Wärmeaustauschsystem (1) einen mit der Ultraschallvorrichtung (85) verbundenen Temperatursensor (96) aufweist,
- vor dem Schritt, der darin besteht, das in der Entwässerungswanne (70) gesammelte Kondensationswasser zu zerstäuben, mit Hilfe des Temperatursensors (96) eine Temperatur des in der Entwässerungswanne (70) gesammelten Kondensationswassers gemessen wird und die Ultraschallvorrichtung (85) aktiviert wird, wenn die Temperatur eine Temperaturschwelle überschreitet.

13. Verfahren zum Durchführen eines Wärmeaustausches nach einem der Ansprüche 9 bis 12, in welchem:
- vorgesehen ist, dass das Wärmeaustauschsystem (1) einen mit der Ultraschallvorrichtung (85) verbundenen Wasserstandsensor aufweist,
- vor dem Schritt, der darin besteht, das in der Entwässerungswanne (70) gesammelte Kondensationswasser zu zerstäuben, mit Hilfe des Wasserstandsensors ein Wasserstand des in der Entwässerungswanne (70) gesammelten Kondensationswassers gemessen wird und die Ultraschallvorrichtung (85) aktiviert wird, wenn der Wasserstand eine Wasserstandschwelle überschreitet.

14. Verfahren zum Durchführen eines Wärmeaustausches nach einem der Ansprüche 9 bis 13, in welchem:
- vorgesehen ist, dass der mit dem Verdampfer assoziierte Luftkreislauf einen Lufteingang (5), einen Luftausgang (6) und einen Ventilator (15, 25) aufweist, der eingerichtet ist, um in einem Betriebszustand die Luft zwischen dem Lufteingang (5) und dem Luftausgang (6) über den Verdampfer hinweg zirkulieren zu lassen, und dass das Wärmeaustauschsystem einen mit der Ultraschallvorrichtung (85) verbundenen Zustandsdetektor aufweist,
- vor dem Schritt, der darin besteht, das in der Entwässerungswanne (70) gesammelte Kondensationswasser zu zerstäuben, mit Hilfe des Zustandsdetektors der Betriebszustand des Ventilators (15, 25) detektiert wird und die Ultraschallvorrichtung aktiviert wird, wenn der Betriebszustand des Ventilators (15, 25) detektiert worden ist.

## Claims

1. System (1) for heat exchange between air located inside a space (2) and air located outside the space (2), comprising:
- first (10) and second (20) heat exchangers one forming a condenser and the other an evaporator,
- a heat-transfer-fluid circuit connected to the first (10) and second (20) heat exchangers and adapted to circulate a heat-transfer fluid in said first (10) and second (20) heat exchangers,
- a first air circuit associated with the first heat exchanger (10) to perform heat exchange between the heat-transfer fluid and the air located inside the space (2) via the first heat exchanger (10), and a second air circuit associated with the second heat exchanger (20) to perform heat exchange between the heat-transfer fluid and the air located outside the space (2) via the second heat exchanger (20),
- a drainage tray (70) arranged to collect condensation water that forms on the evaporator, said drainage tray (70) comprising an ultrasound device (85) adapted to spray in the form of droplets the condensation water collected in the drainage tray (70),
said heat-exchange system (1) being **characterised in that** it comprises a heating device (90) adapted to heat the condensation water collected in the drainage tray (70), the heating device (90) comprising:
- a heating loop (91) in which a heating fluid circulates, said heating loop (91) extending in the vicinity of the drainage tray (70),
- a distribution circuit adapted to connect the heating loop (91) to the heat-transfer-fluid circuit, said distribution circuit being adapted to circulate the heat-transfer fluid coming from the condenser, as a heating fluid, in the heating loop (91).

2. Heat-exchange system (1) according to claim 1, wherein the distribution circuit is adapted to circulate the heat-transfer fluid in the heating loop (91) only when the first heat exchanger (10) forms the condenser and the second heat exchanger (20) forms the evaporator.

3. Heat-exchange system (1) according to claim 2, wherein the heating loop (91) has a first end (91a) connected to the first heat exchanger (10) and a second end (91b) connected to the second heat exchanger (20), the distribution circuit comprising a bypass pipe (93) directly connecting the first (91a) and second (91b) ends of the heating loop (91), the distribution circuit being adapted to:
- circulate the heat-transfer fluid in the heating loop (91) from the first end (91a) towards the second end (91b) when the first heat exchanger (10) forms the condenser and the second heat exchanger (20) forms the evaporator,
- circulate the heat-transfer fluid in the bypass pipe (93) from the second end (91b) towards the first end (91a) when the first heat exchanger (10) forms the evaporator and the second heat exchanger (20) forms the condenser.

4. Heat-exchange system (1) according to any one of claims 1 to 3, wherein the drainage tray (70) has an upper face (71) adapted to retain the condensation water and a lower face (72) opposite to the upper face (71), the heating loop (91) extends on the lower face (72) of the drainage tray (70).

5. Heat-exchange system (1) according to any one of claims 1 to 4, wherein the drainage tray (70) comprises a bottom wall (73) and a side wall (74) extending perpendicularly from the bottom wall (73), the bottom wall (73) and the side wall (74) defining a space for receiving the condensation water, the drainage tray (70) further comprising at least one inner wall (81, 82, 83) arranged in the receiving space to define a channel for the condensation water collected, said channel having an upstream zone (75), by which the condensation water enters the receiving space, and a downstream zone (76), in which the ultrasound device (85) is placed, the channel being placed in correspondence with the heating loop (91).

6. Heat-exchange system (1) according to any one of claims 1 to 5, comprising a temperature sensor (96) adapted to measure a temperature of the condensation water collected in the drainage tray (70), said temperature sensor (96) being connected to the ultrasound device (85) to activate said ultrasound device (85) when said temperature exceeds a threshold temperature.

7. Heat-exchange system (1) according to any one of claims 1 to 6, comprising a water-level sensor adapted to measure a level of the condensation water collected in the drainage tray (70), said water-level sensor being connected to the ultrasound device (85) to activate said ultrasound device (85) when said water level exceeds a threshold level.

8. Heat-exchange system (1) according to any one of claims 1 to 7, wherein the air circuit associated with the evaporator comprises an air inlet (5), an air outlet (6), and a fan (15, 25) adapted to, in an operating state, circulate the air between the air inlet (5) and the air outlet (6) through the evaporator, the heat-exchange system comprising a state sensor adapted to detect the state of the fan (15, 25), said state sensor being connected to the ultrasound device (85) to activate said ultrasound device (85) when the operating state of the fan (15, 25) is detected.

9. Method for performing heat exchange between air located inside a space (2) and air located outside the space (2), said performing method implementing a heat-exchange system (1) comprising:
- first (10) and second (20) heat exchangers,
- a heat-transfer-fluid circuit connected to the first (10) and second (20) heat exchangers,
- first and second air circuits associated respectively with the first (10) and second (20) heat exchangers,
- a drainage tray (70) comprising an ultrasound device (85),
- a heating device (90), the heating device (90) comprising a heating loop (91) extending in the vicinity of the drainage tray (70) and a distribution circuit,
said performing method comprising the steps of:
- circulating a heat-transfer fluid in the first (10) and second (20) heat exchangers one forming a condenser and the other an evaporator, via the heat-transfer-fluid circuit, the heating loop (91) being connected to the heat-transfer-fluid circuit and the heat-transfer fluid coming from the condenser circulating in the heating loop (91), via the distribution circuit,
- circulating the air located inside the space (2) in the vicinity of the first heat exchanger (10), via the first air circuit, so as to perform heat exchange between the heat-transfer fluid and the air located inside the space (2) via the first heat exchanger (10), and circulating the air located outside the space (2) in the vicinity of the second heat exchanger (20), via the second air circuit, so as to perform heat exchange between the heat-transfer fluid and the air located outside the space (2) via the second heat exchanger (20),
- collecting the condensation water that forms on the evaporator in the drainage tray (70),
- heating the condensation water collected in the drainage tray (70), via the heating device (90),
- spraying in the form of droplets the condensation water collected in the drainage tray (70), via the ultrasound device (85).

10. Method for performing heat exchange according to claim 9, wherein during the step of circulating the heat-transfer fluid, the heat-transfer fluid coming from the condenser is circulated in the heating loop (91) only when the first heat exchanger (10) forms the condenser and the second heat exchanger (20) forms the evaporator.

11. Method for performing heat exchange according to claim 10, wherein:
- it is provided for the heating loop (91) to have a first end (91a) connected to the first heat exchanger (10) and a second end (91b) connected to the second heat exchanger (20), and for the distribution circuit to comprise a bypass pipe (93) directly connecting the first (91a) and second (91b) ends of the heating loop (91),
- during the step of circulating the heat-transfer fluid:
the heat-transfer fluid is circulated in the heating loop (91) from the first end (91a) towards the second end (91b) when the first heat exchanger (10) forms the condenser and the second heat exchanger (20) forms the evaporator,
the heat-transfer fluid is circulated in the bypass pipe (93) from the second end (91b) towards the first end (91a) when the first heat exchanger (10) forms the evaporator and the second heat exchanger (20) forms the condenser.

12. Method for performing heat exchange according to any one of claims 9 to 11, wherein:
- it is provided for the heat-exchange system (1) to comprise a temperature sensor (96) connected to the ultrasound device (85),
- before the step of spraying the condensation water collected in the drainage tray (70), a temperature of the condensation water collected in the drainage tray (70) is measured and the ultrasound device (85) is activated when said temperature exceeds a threshold temperature, via the temperature sensor (96).

13. Method for performing heat exchange according to any one of claims 9 to 12, wherein:
- it is provided for the heat-exchange system (1) to comprise a water-level sensor connected to the ultrasound device (85),
- before the step of spraying the condensation water collected in the drainage tray (70), a level of the condensation water collected in the drainage tray (70) is measured and the ultrasound device (85) is activated when said water level exceeds a threshold level, via the water-level sensor.

14. Method for performing heat exchange according to any one of claims 9 to 13, wherein:
- it is provided for the air circuit associated with the evaporator to comprise an air inlet (5), an air outlet (6), and a fan (15, 25) adapted to, in an operating state, circulate the air between the air inlet (5) and the air outlet (6) through the evaporator, and for the heat-exchange system to comprise a state sensor connected to the ultrasound device (85),
- before the step of spraying the condensation water collected in the drainage tray (70), the state of the fan (15, 25) is detected and the ultrasound device (85) is activated when the operating state of the fan (15, 25) is detected, via the state sensor.
